# DEMANDE DE BREVET EUROPEEN

(11) **EP 1 110 665 A1**
(43) Date de publication de la demande: **27.06.2001**
(21) Numéro de dépôt: 00403412.0
(22) Date de dépôt: 06.12.2000
(51) Int. Cl.: B23P 19/08

(54) **Procédé et dispositif pour le montage d'au moins un segment dans la gorge d'un piston de moteur à combustion interne**

(30) Priorité: 15.12.1999 FR 9915809
(71) Demandeur: RENAULT AUTOMATION COMAU, 92365 Meudon la Forêt, Cedex (FR)
(72) Inventeur: Thurier, Yvan, 94320 Thiais (FR)
(74) Mandataire: Robert, Jean-Pierre

(57) **Abrégé**

Procédé de montage d'au moins un segment (1) dans une gorge (10) de piston (9) comprenant les phases de:
- dilater radialement le segment au moyen de doigts (3,4) mobiles, régulièrement répartis au contact de la surface interne du segment,
- placer et maintenir le segment dilaté au droit de la gorge (10) du piston,
- escamoter axialement les doigts (3, 4) pour autoriser la rétraction du segment dans la gorge.

Selon l'invention, on procède à l'escamotage des doigts en commençant par ceux qui sont le plus éloignés de la fente du segment (1).

## Description

La présente invention concerne un procédé et un dispositif pour mettre en place les segments d'étanchéité dans les gorges d'un piston prévus à cet effet.

Il existe de nombreux dispositifs qui assurent la segmentation automatique des pistons. Chaque segment est extrait d'un magasin en forme de pile, à la base de celle-ci, au moyen d'un poussoir ou d'un tiroir qui prend en charge le segment inférieur de la pile, et le transporte en direction d'un puits de segmentation. A cet endroit chaque segment est dilaté radialement pour permettre l'introduction d'un piston. Lorsque la gorge du piston est en face du segment, les moyens qui ont assuré la dilatation radiale du piston s'effacent brusquement pour que le segment puisse venir se loger élastiquement dans la gorge.

Dans le document US-A-2 792 625, le moyen de dilatation du segment est une sorte de came trapézoïdale logée dans la fente du segment que l'on extrait radialement du segment et qui écarte les bords de cette fente et provoque une augmentation du diamètre du segment.

Dans le document FR-A-2 688 156, la dilatation radiale est obtenue par un jeu de doigts qui sont écartés radialement à l'intérieur de chaque segment et sont ensuite effacés axialement lorsque le piston est logé entre les doigts.

L'un des défauts les plus fréquents dans ce type de dispositif réside dans la mauvaise mise en place du segment dans la gorge qui se traduit par un accrochage d'au moins l'une des extrémités du segment au bord de la gorge du piston lorsque le segment est livré à lui-même et se contracte élastiquement.

Par la présente invention on entend remédier à cet inconvénient de manière simple.

A cet effet l'invention a pour premier objet un procédé de mise en place d'au moins un segment dans une gorge de piston comprenant les phases de :
- dilater radialement le segment au moyen de doigts mobiles régulièrement répartis au contact de la surface interne de ce segment,
- placer et maintenir le segment dilaté au droit de la gorge du piston,
- escamoter axialement les doigts pour autoriser la rétraction du segment dans la gorge.

Selon l'invention, on procède à l'escamotage des doigts en commençant par ceux qui sont le plus éloignés de la fente du segment.

En procédant de la sorte, on permet à la partie du segment opposée à la fente de pénétrer en premier dans la gorge du piston, grâce à quoi, on est certain que la totalité du segment pénétrera dans la gorge et notamment ses parties voisines de la fente, sans risque d'accrochage de celles-ci sur les bords de cette gorge.

Pour pouvoir obtenir cette séquence dans l'escamotage des doigts, il est nécessaire de connaître leur position relativement à la fente. C'est pourquoi le procédé comporte également une phase préalable à la dilatation du segment, d'orientation angulaire déterminée des doigts par rapport au segment.

L'invention a également pour objet un dispositif pour mettre en oeuvre le procédé ci-dessus. Ce dispositif comporte un préhenseur de segments avec un support, une pluralité de mors régulièrement répartis autour d'un axe et mobiles radialement par rapport à cet axe par coulissement dans le support, chaque mors présentant une surface frontale s'étendant dans un plan commun perpendiculaire audit axe et une surface terminale sensiblement parallèle à cet axe et située au plus près de ce dernier, l'ensemble des surfaces terminales délimitant un volume entre les mors sensiblement cylindrique pour coiffer une tête de piston, chaque mors étant équipé d'un doigt mobile axialement le long de la surface terminale, entre une position où il est en saillie par rapport à la surface frontale et une position où il est escamoté sous cette surface, des moyens d'actionnement en synchronisme des mors dans leur mouvement radial et des moyens d'actionnement selon une séquence déterminée de chacun des doigts entre ces deux positions.

Le dispositif ci-dessus n'est bien entendu pas le seul à pouvoir mettre en oeuvre le procédé de l'invention. Cependant, il constitue un préhenseur capable d'être fixé à l'extrémité d'un bras de robot, pour venir prendre en charge le segment à partir d'une position d'attente déterminée, en le dilatant, ce qui lui permet d'être maintenu par friction sur les doigts du préhenseur, pour le transporter au droit d'un poste d'attente pour le piston à garnir, l'accouplement du préhenseur et du piston étant réalisé par le robot dont on a maîtrisé par programmation les trajectoires qu'il maintient. Comme le robot connaît la position angulaire exacte des doigts du préhenseur et que le segment est dans une position d'attente déterminée, le robot connaît donc exactement quels sont ceux des doigts qui sont opposés à la fente du segment.

Le préhenseur constitue un puits de segmentation mobile venant coiffer la tête de piston et libérer le segment lorsque celui-ci est au droit de la gorge correspondante de cette tête. Cette architecture d'outil présente l'avantage de rendre extrêmement flexible un poste de segmentation de pistons, toutes les variations dimensionnelles existantes entre différents types de pistons à segmenter étant prises en compte au seul niveau de la programmation du robot portant le préhenseur.

Un tel poste de segmentation, grâce au procédé et à l'outil selon l'invention, peut se présenter avec un ensemble de magasins de segments répartis en éventail autour de l'axe de rotation vertical du robot équipé du préhenseur, chaque magasin étant équipé d'un moyen de manutention et d'extraction unitaire du segment formé par un tiroir situé sous le magasin et possédant dans sa surface supérieure une empreinte d'accueil de chaque segment et un moyen de manoeuvre associé au tiroir formé par un poussoir porté par l'extrémité d'un bras monté tournant autour de l'axe vertical du robot et indexable sous chaque magasin.

D'autres caractéristiques et avantages de l'invention ressortiront de la description donnée ci-après d'un exemple de sa réalisation.

Il sera fait référence aux dessins annexés parmi lesquels :
- la figure 1 est une vue schématique d'un puits de segmentation comportant les moyens permettant de mettre en oeuvre le procédé selon l'invention,
- la figure 2 est une vue en coupe partielle d'un préhenseur conforme à l'invention,
- la figure 3 illustre par une vue de dessus schématique un poste complet de segmentation flexible,
- la figure 4 est une vue schématique latérale de ce poste,
- la figure 5 est une vue de détail du tiroir de dépilage d'un segment conforme à l'invention.

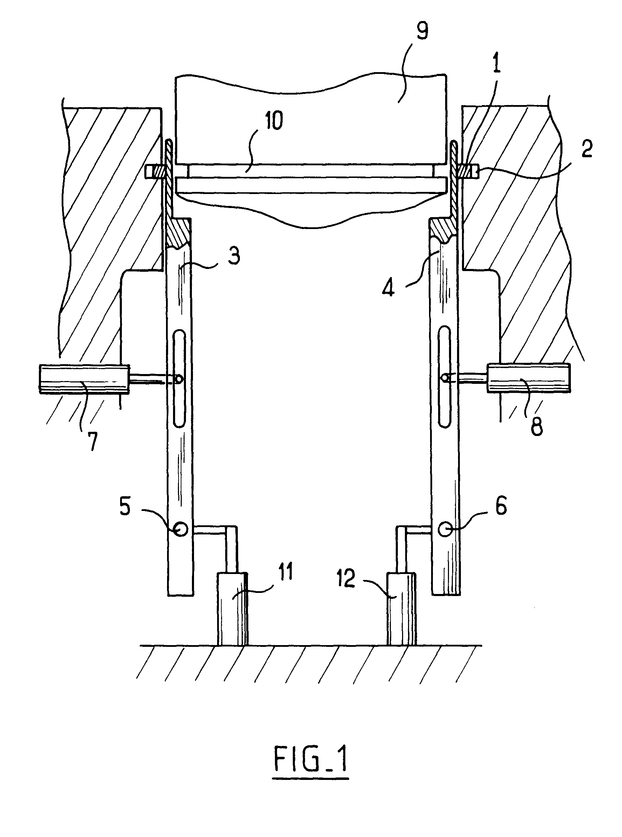

Le puits de segmentation représenté à la figure 1 est du type de celui décrit dans le document FR-A-2 688 156. Le segment 1 est amené dans une gorge 2 du puits de segmentation et des doigts 3, 4, régulièrement répartis à l'intérieur du puits de segmentation sont actionnés vers l'extérieur autour d'un axe d'articulation 5, 6 par des organes moteurs tels que des vérins 7, 8. On comprend donc qu'en commandant la rétraction des vérins 7 et 8, on fait basculer les doigts 3 et 4 vers la paroi du puits de segmentation de sorte que leur extrémité dilate le segment 1 pour dégager au maximum le puits. Lorsque le segment est suffisamment dilaté, on introduit une tête de piston 9 qui possède une gorge 10 dans laquelle doit être logé le segment 1.

Lorsque la tête de piston est en place, des actionneurs 11, 12 tels que des petits vérins, tirent vers le bas les doigts 3 et 4. Dans le document cité ci-dessus, l'escamotage axial de ces doigts est réalisé par un organe commun d'entraînement.

Selon l'invention chacun des doigts est commandé individuellement, ou au moins un groupe de doigts est commandé séparément d'un autre groupe de doigts de manière qu'on puisse réaliser l'escamotage en séquence de ceux-ci afin de commander l'escamotage en premier des doigts qui se trouvent à l'opposé diamétral de la fente du segment.

Pour ce faire, il faut bien entendu connaître la position angulaire de cette fente lorsque le segment est mis en place dans la gorge 2 du puits de segmentation. A cet effet, tout moyen d'indexation est possible et le tiroir d'amenée du segment depuis la pile du magasin jusqu'au puits de segmentation peut comporter un index qui coopère avec la fente si celle-ci est repérée à l'intérieur du magasin. Le document US-A-2 792 625 illustre un magasin avec une nervure d'indexation de la position de la fente de chaque segment.

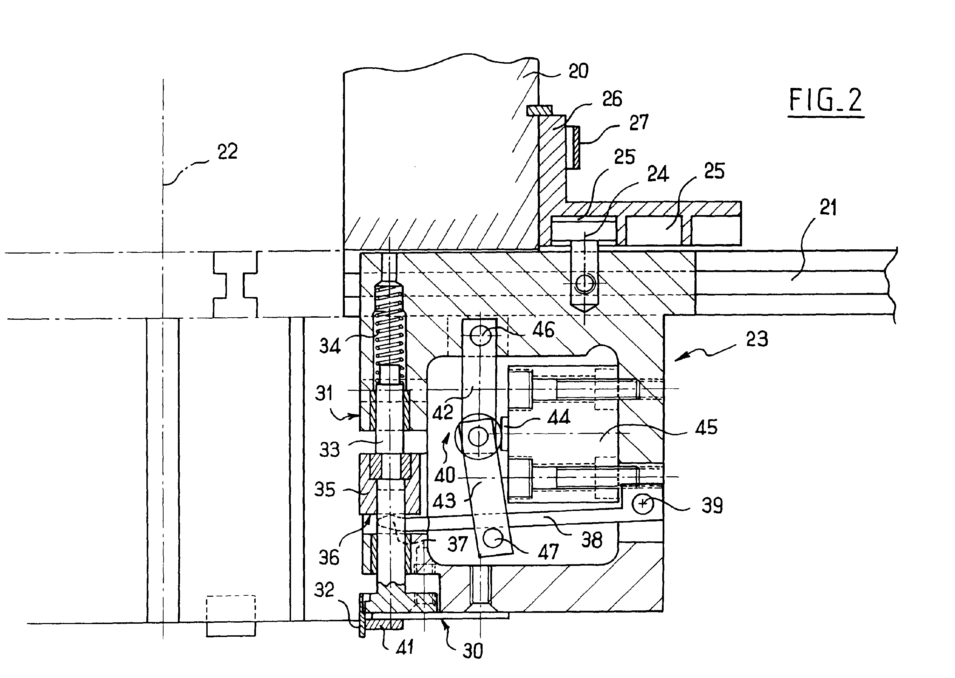

La figure 2 illustre un dispositif de segmentation de piston capable de mettre en oeuvre le procédé de l'invention dans lequel l'outil principal est un préhenseur qui est conçu pour prendre en charge un segment extrait de la partie inférieure d'une pile de segments, le dilater radialement et le présenter au droit d'une gorge de piston, lequel est maintenu dans une position déterminée. Un tel préhenseur peut alors avantageusement équiper l'extrémité d'un bras de robot et est adapté à traiter des pistons de différents diamètres avec des segments également de différents diamètres dans un même poste. C'est par le robot, en outre, que la position angulaire de la fente du segment est connue.

La figure 2 est une vue en demi coupe radiale d'un préhenseur conforme à l'invention. Ce préhenseur comporte un support général 20 pourvu par exemple de six glissières 21 séparées angulairement les unes des autres de 60°. Le support 20 peut être plein mais sera de préférence tubulaire avec un axe général 22. Le plan des glissières 21 est perpendiculaire à celui de l'axe 22. Dans ces glissières sont montés des mors mobiles 23 qui possèdent de manière connue des galets 24 susceptibles de coopérer avec des rainures hélicoïdales 25 d'une roue de manoeuvre 26 qui est montée tournante autour du support tubulaire 20 au moyen d'un lien d'entraînement 27 l'accouplant à un moteur non représenté, cette roue de manoeuvre 26 engendrant le déplacement simultané des six mors tels que 23 le long des glissières 21 ainsi que leur maintien dans une position déterminée le long de celle-ci. Par cet agencement on comprend que les mors 23 peuvent donc constituer des éléments de dilatation d'un segment.

Chaque mors 23 possède une surface frontale 30 et une surface terminale 31, la surface 30 étant perpendiculaire à l'axe 22 tandis que la surface 31 y est sensiblement parallèle. Un doigt de préhension de segment 32 fait normalement saillie au-delà de la surface 30. Ce doigt 32 en forme de palette légèrement cintrée est en fait porté par une tige 33 poussée en direction de la surface 30 par un ressort 34. Le doigt 32 est sensiblement compris dans la surface terminale 31 de chaque mors 23. La tige 33, parallèle à l'axe 22, constitue un pivot pour le doigt 32 qui ainsi peut s'adapter à la variation de la courbure interne d'un segment ou existant d'un segment à l'autre.

La tige 33 possède une bague intermédiaire 35 qui fournit un épaulement 36 d'appui à l'extrémité 37 d'un levier 38 articulé par son autre extrémité au corps du mors 23 autour d'un axe 39. Le levier 38 est normalement repoussé en direction de la surface frontale 30 du mors par le ressort 34 via la tige 33. Pour écarter ce levier de la surface 30 on a prévu un organe de manoeuvre 40 monté dans le corps de chaque mors 23, l'activation de cet organe de manoeuvre tendant à écarter donc le levier 38 de la surface 30, d'enfoncer la tige 33 en direction du ressort 34 en surmontant son effort de rappel et donc d'effacer le doigt 32 sous la surface 30. On comprend que si un segment 41 est maintenu dilaté par un doigt 32 en saillie par rapport à la surface 30, l'escamotage du doigt 32 parallèlement à l'axe 22 libère ce segment 41 qui élastiquement se contracte radialement et vient tomber dans la gorge du piston qui était préalablement coiffée par le préhenseur représenté.

Dans le mode de réalisation illustré, l'organe 40 de commande de l'effacement du doigt 32 comporte un jeu de deux leviers 42, 43 articulés entre eux qui constituent un mécanisme de transformation du mouvement de la tige 44 d'un petit vérin pneumatique 45 logé dans le corps du mors 23. Ce type de transformation permet de développer dès le début du mouvement de la tige 44 un effort important, ce qui est nécessaire pour déplacer la tige 33 au début de son coulissement dans le mors 23. Tout dispositif équivalent pourrait bien entendu convenir sans sortir du cadre de l'invention. On comprend de la figure qu'une extension de la tige 44 provoque la rotation du levier 42 qui est articulée en 46 au corps du mors 23 tandis que le levier 43 étant articulé en 47 au levier 38 ne peut qu'entraîner un déplacement de ce levier 48 dans le sens de l'enfoncement de la tige 33.

Comme chacun des doigts 32 de chacun des mors 23 peut être commandé individuellement, le préhenseur représenté à la figure 2 constitue un dispositif capable de mettre en oeuvre le procédé de l'invention puisque l'on peut commander l'effacement de chacun des six doigts 32 du préhenseur dans une séquence commençant par l'effacement du doigt situé à l'opposé de la fente du segment.

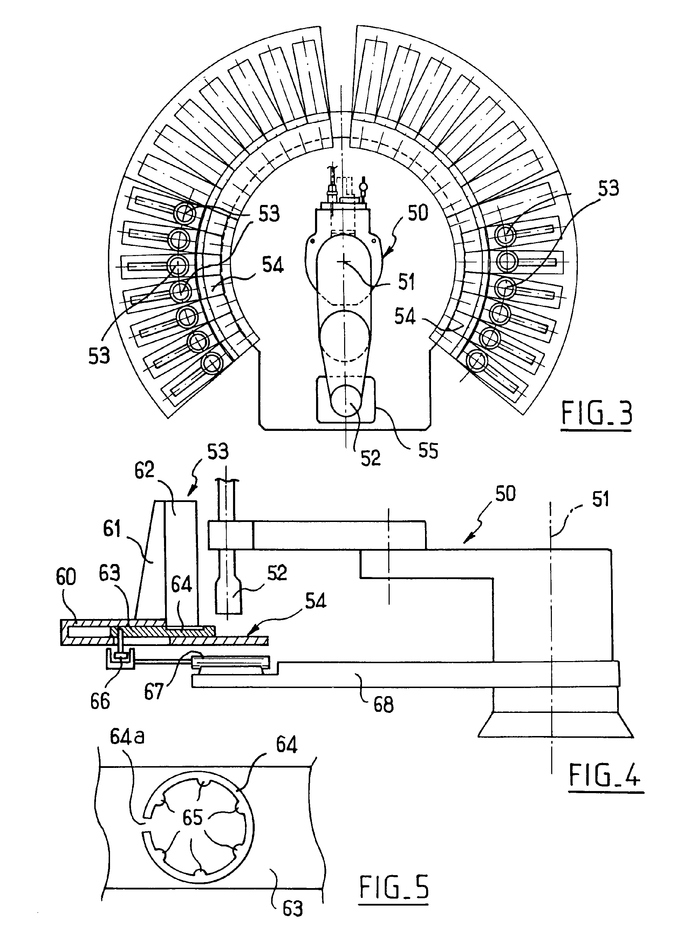

A la figure 3, on a représenté en vue de dessus un poste de segmentation de piston complet, c'est-à-dire comportant un robot 50 tournant autour d'un axe 51 vertical et muni à l'extrémité de son bras d'un préhenseur 52 de segments comme celui décrit en regard de la figure 2.

Une pluralité de magasins 53 sont disposés en éventail autour de l'axe 51 du robot. Chaque magasin est équipé à sa base d'un tiroir capable de transférer le segment inférieur du magasin en direction d'un poste 54 d'attente que peut atteindre le robot 50. Ainsi le robot peut prendre le segment présent au poste 54 pour le présenter au poste 55 qui a été préalablement garni d'un piston. Le préhenseur 52 coiffe le piston et, comme expliqué précédemment libère le segment qui pénètre dans la gorge de ce dernier auquel il est destiné.

En général un piston comporte trois gorges et le robot procède au garnissage de celles-ci l'une après l'autre, par les différents segments prévus à cet effet après les avoir saisis à leur poste 54 de présentation. Puis le piston est évacué par un dispositif de manutention (carrousel ou autre) en même temps qu'un nouveau piston à garnir est mis en place au poste 55. De préférence, le poste 55 comportera deux pistons à garnir.

A la figure 4, on a représenté schématiquement par une coupe radiale de la figure 3 un magasin 53 soutenu par un bâti 60 au moyen d'un gousset 61 qui forme la cale d'indexation angulaire de chacun des segments empilés dans le magasin 53 (en forme de fût cylindrique 62 de diamètre légèrement inférieur au diamètre intérieur de chaque segment).

A l'intérieur du bâti 60, à la base du fût 62, une plaque 63 est guidée à coulissement selon une direction radiale passant par l'axe 51 du robot. Ce tiroir 63 est pourvu d'un évidemment 64 (voir figure 5) en forme de gorge plane ménagée dans la surface supérieure du tiroir. Cette gorge est incomplète, de la forme du segment qu'elle reçoit (son diamètre extérieur étant légèrement supérieur au diamètre extérieur du segment), la partie absente 64a correspondant sensiblement à la largeur du gousset 61, donc à la fente du segment. Le diamètre intérieur de la gorge est flanqué d'une pluralité d'alvéoles 65 (autant que de doigts du préhenseur 52).

Le tiroir 63 est équipé d'un taquet d'entraînement 66 qui traverse la partie inférieure du bâti 60 pour coopérer avec un actionneur 67 (un vérin) porté par un bras radial 68 monté tournant autour de l'axe 51 du robot 50 et indexable en position autour de cet axe dans toutes les positions correspondant à celles de chacun des magasins 53. La motorisation de ce bras est assurée par tout moyen connu programmable en liaison avec le cycle de segmentation programmé pour le robot 50.

On comprend que la rétraction du vérin 67 déplace radialement vers le centre le tiroir 63 et que la gorge 64 contenant un segment est amenée au droit du poste d'attente. Le robot place le préhenseur 52 à l'aplomb de cette gorge. Les doigts 32 sont en saillie vers le bas et les mors 23 sont rassemblés au plus près de l'axe 22 (voir figure 2). Les doigts pénètrent dans les alvéoles 65 puis les mors 23 sont déplacés ensemble radialement vers l'extérieur. Le segment est alors légèrement dilaté dans la gorge 65 et peut être extrait de cette gorge en enserrant élastiquement les doigts 32.

Le robot place ensuite le préhenseur 52 à l'aplomb du piston présent au poste 55 en augmentant si nécessaire la dilatation du segment par entraînement des mors 23 vers l'extérieur. Le piston est ensuite coiffé par le préhenseur jusqu'à placer le segment au niveau de la gorge qui doit le recevoir. Puis les actionneurs (vérins) 45 sont commandés afin d'escamoter axialement vers le haut les doigts 32 sous la surface 30. Comme la position angulaire du préhenseur par rapport au segment et à la fente de ce dernier est connue du robot, il est possible de commander l'escamotage des doigts en commençant par ceux les plus éloignés de la fente du segment, ce qui garantit une pénétration sans accrochage du segment dans la gorge du piston. Pendant ce temps, le tiroir 63 a été ramené à sa position initiale par l'actionneur 67 et le dernier segment du magasin 53 est tombé dans la gorge 65 (qui est d'une profondeur égale à l'épaisseur du segment à transférer). Le bras 68 a été manoeuvré ensuite pour être placé sous un autre magasin en fonction des besoins programmés du poste.

## Revendications

1. Procédé de montage d'au moins un segment (1) dans une gorge (10) de piston (9) comprenant les phases de:
- dilater radialement le segment au moyen de doigts (3,4) mobiles, régulièrement répartis au contact de la surface interne du segment,
- placer et maintenir le segment dilaté au droit de la gorge (10) du piston,
- escamoter axialement les doigts (3, 4) pour autoriser la rétraction du segment dans la gorge,
caractérisé en ce qu'on procède à l'escamotage des doigts en commençant par ceux qui sont le plus éloignés de la fente du segment (1).

2. Procédé selon la revendication 1, caractérisé en ce qu'il comprend une phase, préalable à la dilatation, d'orientation angulaire déterminée des doigts par rapport aux segments.

3. Dispositif de montage pour mettre en oeuvre le procédé selon l'une des revendications précédentes, caractérisé en ce qu'il comporte un préhenseur de segments avec :
- un support (20),
- une pluralité de mors (23) régulièrement répartis autour d'un axe (22) et mobiles radialement par rapport à cet axe par coulissement dans le support (20), chaque mors (23) présentant une surface frontale (30) s'étendant dans un plan commun perpendiculaire audit axe (22) et une surface terminale (31) sensiblement parallèle à cet axe et située au plus près de celui-ci, chaque mors (23) étant équipé d'un doigt (32) mobile axialement le long de la surface terminale (31) entre une position où il est en saillie par rapport à la surface frontale (30) et une position où il est escamoté sous cette surface (30),
- des moyens (24, 25, 26) d'actionnement en synchronisme des mors (23) dans leur mouvement radial et
- des moyens d'actionnement selon une séquence déterminée de chacun des doigts entre ces deux positions.

4. Dispositif selon la revendication 3, caractérisé en ce que l'extrémité de chaque doigt (32) qui fait saillie par rapport à la surface frontale (30) du mors (23) correspondant est en forme de palette parallèle à l'axe.

5. Dispositif selon la revendication 4, caractérisé en ce que chaque doigt (32) est monté pivotant sur le mors (23) correspondant autour d'un axe parallèle à l'axe (22) susdit.

6. Dispositif selon la revendication 5, caractérisé en ce que chaque doigt (32) est accouplé à un organe moteur (45) individuel porté par le mors (23) correspondant.

7. Dispositif selon l'une des revendications précédentes, caractérisé en ce qu'il comporte un présentoir de segments comportant au moins un magasin (53) de segments empilés avec des moyens (61) pour conserver une orientation angulaire identique pour chaque segment du magasin, et un moyen (63) de manutention du segment inférieur du magasin entre sa position d'attente dans le magasin et une position (54) de présentation pour le préhenseur, ce moyen de manutention possédant un organe d'indexation (64a) de la position angulaire du segment coopérant avec la fente de ce dernier.

8. Dispositif selon la revendication 7, caractérisé en ce que le moyen de manutention est formé par un tiroir (63) situé sous le magasin (53) et possédant dans sa surface supérieure une empreinte d'accueil de chaque segment en forme de gorge plane (64) circulaire incomplète, cette gorge (64) étant flanquée de son côté intérieur d'une pluralité d'alvéoles (65) pour accueillir les doigts du préhenseur (52).

9. Poste de segmentation de pistons de moteurs de véhicule automobile mettant en oeuvre le dispositif selon l'une des revendications 7 et 8, caractérisé en ce que le préhenseur (52) est porté par un robot (50) dont l'axe de rotation vertical (51) constitue le centre d'un ensemble de magasins (53) à segments répartis en éventail autour de cet axe, le moyen de manoeuvre du tiroir (63) étant formé par un actionneur (67) porté par l'extrémité d'un bras (68) monté tournant autour de l'axe susdit et indexable sous chaque magasin.
